# DEMANDE DE BREVET EUROPEEN

(11) **EP 0 919 316 A1**
(43) Date de publication de la demande: **02.06.1999**
(21) Numéro de dépôt: 98402970.2
(22) Date de dépôt: 27.11.1998
(51) Int. Cl.: B23D 45/00, E01B 31/04

(54) **Tronçonneuse de rail**

(30) Priorité: 27.11.1997 FR 9714952
(71) Demandeur: SOCIETE TURRIPINOISE DE MECANIQUE, 38110 St. Didier de la Tour (FR)
(72) Inventeur: Huboud-Peron, Maurice, 38352 La Tour du Pin (FR)
(74) Mandataire: Beauchamps, Georges

(57) **Abrégé**

L'invention concerne une tronçonneuse de rails (2) à bloc moteur (16) entraînant une meule rotative (25) et à support (15) guidant la meule dans son plan transversalement au rail (2) en étant articulé sur un étau (7) à fixer au rail (2), la meule (25) étant montée à une extrémité d'un bras (27) relié par son autre extrémité au bloc moteur (16).

Ledit bras porte-meule (27) est articulé par son autre extrémité au bloc moteur (16) autour d'un axe (24) parallèle à l'axe (12) d'articulation sur l'étau (7) et à l'axe longitudinal du rail, le bloc moteur (16) étant relié en permanence à l'étau (7) de façon non-retournable horizontalement et non renversable verticalement en étant ainsi toujours d'un même côté du plan de la meule (25) par rapport à l'étau (7).

L'invention s'applique aux voies ferrées.

## Description

La présente invention a pour objet une tronçonneuse pour pièces métalliques allongées, notamment pour rails de voie de chemin de fer.

Il est nécessaire, lors de l'installation d'une voie de chemin de fer, d'effectuer des ajustements de longueur des rails qui vont être posés, en réalisant le tronçonnage de ceux-ci. De plus, lors de la réfection d'une voie ferrée, il est parfois nécessaire, si certains tronçons sont abîmés, de tronçonner les parties abîmées pour les remplacer par des parties neuves.

Le tronçonnage des rails est réalisé par l'intermédiaire de tronçonneuses comportant généralement un moteur thermique entraînant une meule qui va effectuer le travail de coupe.

La tronçonneuse, objet de l'invention, est du type comportant un bloc moteur associé à une meule qu'il entraîne en rotation et monté sur un support servant de guidage dans le plan de la meule et pivotant transversalement par rapport à la pièce métallique en étant monté pivotant sur un étau destiné à être fixé sur la pièce métallique, tandis que la meule est montée à une extrémité d'un bras relié par son autre extrémité au bloc moteur.

Un appareil de ce type était déjà connu notamment par la publication n° 2 267 418 du brevet français n° 74 12 377 concernant une tronçonneuse équipée d'un bloc moteur et d'un support se fixant, sur le rail à tronçonner, par l'intermédiaire d'un étau. Le support de la tronçonneuse est constitué par deux bras sensiblement de même longueur, articulés l'un à l'autre et articulés, par leur autre extrémité, respectivement à la tronçonneuse et à l'étau en un point situé sensiblement au-dessus du rail. Ces bras articulés assurent un bon guidage de la meule dans un plan transversal perpendiculaire au rail à couper. Toutefois, l'opérateur se trouve dans une position de travail inconfortable puisque la tronçonneuse est très près du sol et qu'il porte la tronçonneuse tout en faisant bouger celle-ci par rapport au rail pour éviter de caler le moteur, phénomène qui se produirait si la meule restait dans une même position par rapport au rail. En effet, le moteur de la tronçonneuse étant de puissance limitée, il faut que la surface de contact entre la meule et le rail soit la plus petite possible pour éviter que le moteur ne peine et pour assurer une coupe efficace. L'opérateur se trouve donc dans une position incommode et dans une zone dans laquelle il subit les nuisances de fumée du moteur thermique et des étincelles qui résultent de la coupe. En outre, lorsque le rail a été tronçonné en partie d'un côté de celui-ci, il convient d'arrêter la coupe, de désolidariser le bloc moteur des bras articulés pour le démonter ainsi de son support, de basculer le support de l'autre côté du rail, de faire pivoter le bloc moteur de 180° autour d'un axe vertical situé dans le plan de la meule et passant par son centre pour retournement du bloc moteur autour de cet axe vertical et de remonter celui-ci sur les bras articulés formant support du même côté initial de celui-ci, afin de pouvoir réaliser la seconde partie de la coupe en rendant ainsi celle-ci complète. Ainsi pendant la première phase de l'opération de coupe, le bloc moteur est situé, par rapport au plan de la meule, du côté de ce plan qui est opposé au côté où se trouve l'étau et le retournement précité fait passer le bloc moteur de l'autre côté dudit plan, c'est-à-dire du côté où se trouve l'étau.

Le but de l'invention est de fournir une tronçonneuse pour pièces métalliques allongées, notamment pour rails, qui soit d'une manipulation plus pratique et plus confortable ou commode pour l'opérateur en éloignant celui-ci des zones de production de fumée du moteur et de production d'étincelles, en l'éloignant de la zone produisant des vibrations, tout en lui permettant d'exercer beaucoup moins d'effort pour réaliser la coupe. Une autre but de l'invention est de fournir une tronçonneuse qui permette le tronçonnage complet d'un rail sans démontage même partiel de la tronçonneuse et sans retournement du bloc moteur relativement à son support.

Pour résoudre ce problème technique, la tronçonneuse conforme à l'invention est caractérisée en ce que ledit bras porte-meule est monté pivotant par son autre extrémité précitée sur le bloc moteur autour d'un axe d'articulation parallèle à l'axe d'articulation sur l'étau et à la direction d'axe longitudinal de la pièce métallique à tronçonner,tandis que le bloc moteur est relié en permanence à l'étau de façon non-retournable autour d'un axe sensiblement vertical et non renversable autour d'un axe sensiblement horizontal en étant ainsi toujours situé d'un même côté du plan de la meule par rapport à l'étau. Pour réaliser le tronçonnage d'un rail, l'opérateur dispose ainsi d'une double possibilité de mouvement de la meule par rapport au rail, d'une part par pivotement du support du bloc moteur par rapport au rail et d'autre part par pivotement de la meule par rapport au support du bloc moteur. Le fait, que le bloc moteur ne puisse pas être renversé sens dessus dessous permet d'éviter toute fuite éventuelle de combustible donc tout risque d'incendie.

Selon une autre caractéristique de l'invention, en configuration de travail, l'axe longitudinal propre de l'arbre moteur du bloc moteur se trouve sélectivement dans une position angulaire relative actuelle ou instantanée quelconque variable entre deux angles d'inclinaison limites de 45° de part et d'autre du plan vertical longitudinal médian du rail. Cette disposition permet d'éviter tout risque de fuite d'essence notamment par le bouchon du réservoir de carburant du bloc moteur et par le carburateur du moteur donc tout danger d'incendie par les étincelles de tronçonnage.

Avantageusement, le support du bloc moteur est relié à l'étau par un bras oscillant articulé par l'une de ses extrémités à l'étau, autour d'un axe parallèle à l'axe de rotation d'ouverture et de fermeture de celui-ci et par son autre extrémité au support du bloc moteur, autour d'un axe parallèle au précédent, des moyens de verrouillage étant prévus entre le bras oscillant et le support du bloc moteur pour solidariser ceux-ci entre eux de façon sélectivement déblocable dans une position angulaire relative dans laquelle le bras forme un angle aigu avec le support du bloc moteur.

Lorsque l'étau est fixé sur le rail, la meule se trouve d'un côté de celui-ci. La meule peut alors travailler pour réaliser la coupe transversale du rail sur une certaine partie de sa largeur. Il convient ensuite de déverrouiller le bras oscillant et le support du bloc moteur pour les désaccoupler l'un de l'autre pour réaliser un mouvement d'élévation du bloc moteur et faire passer la meule de l'autre côté du rail. Une fois ce mouvement réalisé, le bras oscillant et le support moteur sont reverrouillés ensemble et il est possible de procéder à la coupe transversale de l'autre partie de la largeur du rail. Cette caractéristique est très intéressante car elle évite, pour réaliser une coupe complète de rail, d'avoir à désolidariser le support du bloc moteur de l'étau, comme c'est le cas avec la tronçonneuse décrite au préambule pour illustrer l'état de la technique.

Suivant une autre caractéristique de l'invention, le bras oscillant est monté pivotant sur l'étau en étant articulé par une extrémité à la partie intermédiaire de la mâchoire d'étau relativement fixe par rapport au rail, prenant appui respectivement sur le dessus et en dessous du champignon du rail, tandis que l'autre extrémité du bras oscillant est articulée au support du bloc moteur vers une extrémité de celui-ci et l'axe d'articulation du bras porte-,meule, qui est coaxialement solidaire de l'arbre moteur, est disposé sensiblement à la verticale de l'axe d'articulation sur l'étau, lorsque la tronçonneuse est au repos.

Cet agencement permet d'une part de disposer d'un débattement suffisant pour permettre le passage de la meule d'un côté à l'autre du rail en restant engagée partiellement dans l'entaille déjà réalisée et d'autre part d'équilibrer la masse constituée par le bloc moteur juste au-dessus du rail qui supporte ainsi le bloc moteur, ce qui facilite la tâche de l'opérateur puisque, la masse étant équilibrée, l'opérateur n'a pas à supporter le poids de la tronçonneuse. La position angulaire relative du bloc moteur varie dans les limites précitées et dépend du diamètre actuel du disque-meule qui décroît avec son usure croissante.

Selon une forme d'exécution de cette tronçonneuse, les moyens de verrouillage du support de bloc moteur sur le bras oscillant sont constitués par un crochet monté de façon déplaçable notamment manuellement par rotation ou coulissement sur le support de bloc moteur et destiné à venir accrocher une butée solidaire du bras oscillant.

Afin de faciliter le mouvement d'élévation du support du bloc moteur relativement au bras oscillant, lorsque ces deux pièces sont déverrouillées l'une de l'autre, au moins un ressort tel qu'un vérin à gaz est disposé entre le bras oscillant et le support de bloc moteur pour ouvrir l'angle que forment ces deux éléments, lorsque les moyens de verrouillage sont en position inactive ou déverrouillée.

Afin de faciliter la manipulation de la tronçonneuse par un opérateur et écarter l'opérateur de la zone dans laquelle est effectuée le tronçonnage, le support de bloc moteur est solidaire d'un levier d'orientation générale sensiblement orthogonale à l'axe d'articulation de l'étau au bras oscillant et à l'extrémité libre duquel est montée une commande manuelle d'accélération du moteur et le bras porte-meule est solidaire d'un levier de manipulation d'orientation générale sensiblement orthogonale audit axe d'articulation de l'étau pour pivotement sélectif du bras porte-meule autour de son axe d'articulation.

Les longueurs respectives du levier porte-accélérateur et du levier de manipulation précités ainsi que la position angulaire relative dudit levier porte-accélérateur dans l'espace sont telles qu'en cours de travail, l'opérateur occupe une station debout confortable.

En pratique, cette attitude confortable de l'opérateur en période de tronçonnage permet d'améliorer, par rapport aux tronçonneuses existantes, l'efficacité de la coupe, compte tenu du moment important résultant de la longueur de ces leviers.

Suivant une autre caractéristique de l'invention l'étau est solidaire, par sa mâchoire relativement fixe précitée, d'un châssis à une extrémité duquel est disposée une roue et de l'autre extrémité duquel est solidaire un bras saillant formant un brancard de manutention tandis qu'avantageusement, le levier de manipulation solidaire du bras porte-meule est sélectivement accouplable rigidement au châssis pour former l'autre brancard de manutention de la tronçcnneuse en configuration et période de transport.

Cette disposition permet de faciliter le transport de la tronçonneuse par roulement à la manière d'une brouette entre deux phases d'utilisation.

Selon encore une autre caractéristique de l'invention, de ladite autre extrémité du châssis est solidaire un second bras saillant s'étendant sensiblement au même niveau que le premier bras saillant sensiblement dans le plan vertical du levier de manipulation ou au voisinage immédiat de ce plan vertical en étant transversalement espacé du premier bras saillant et sélectivement solidarisable du levier de manipulation de façon déconnectable en sa position abaissée sensiblement au même niveau que ledit premier bras saillant et sensiblement parallèle à celui-ci, au moyen d'un verrou porté par exemple par ledit levier de manipulation et susceptible de coopérer avec l'extrémité libre dudit second bras saillant en position sensiblement Jointive dudit levier et de ladite extrémité.

Selon une autre caractéristique de l'invention, le moteur entraîne un arbre coaxial à l'axe autour duquel le bras portant la meule est monté pivotant, l'extrémité de cet arbre, opposée à celle entraînée par le moteur, entraînant la meule par l'intermédiaire d'une transmission par exemple du type à poulies et à courroie crantée logée à l'intérieur de ce bras.

L'entraînement par une courroie crantée assure une grande fiabilité au mécanisme d'entraînement de la meule.

De toute façon, l'invention sera bien comprise à l'aide de la description qui suit, en référence aux dessins schématiques annexés, représentant, à titre d'exemple non limitatif, une forme d'exécution de cette tronçonneuse.

Dans les dessins :

La figure 1 est une vue en perspective de la tronçonneuse conforme à l'invention en position fixée sur un rail à tronçonner.

La figure 2 est une vue de côté de la tronçonneuse avant fixation sur le rail.

Les figures 3 à 5 sont trois vues de côté, à plus grande échelle et partiellement en coupe de la tronçonneuse, respectivement au cours d'une première phase de coupe d'un côté du rail, au cours du passage de la meule d'un côté à l'autre du rail et au cours de la seconde phase de coupe achevant le sectionnement du rail.

La figure 6 en est une vue en coupe transversale selon la ligne VI-VI de figure 5, le moteur proprement dit ayant été omis.

La figure 7 est une vue isolée agrandie de côté de l'étau seul avec sa commande manuelle en position fermée de serrage.

La figure 8 est une vue semblable à la figure 7 mais montrant l'étau et sa commande manuelle en position ouverte ou desserrée.

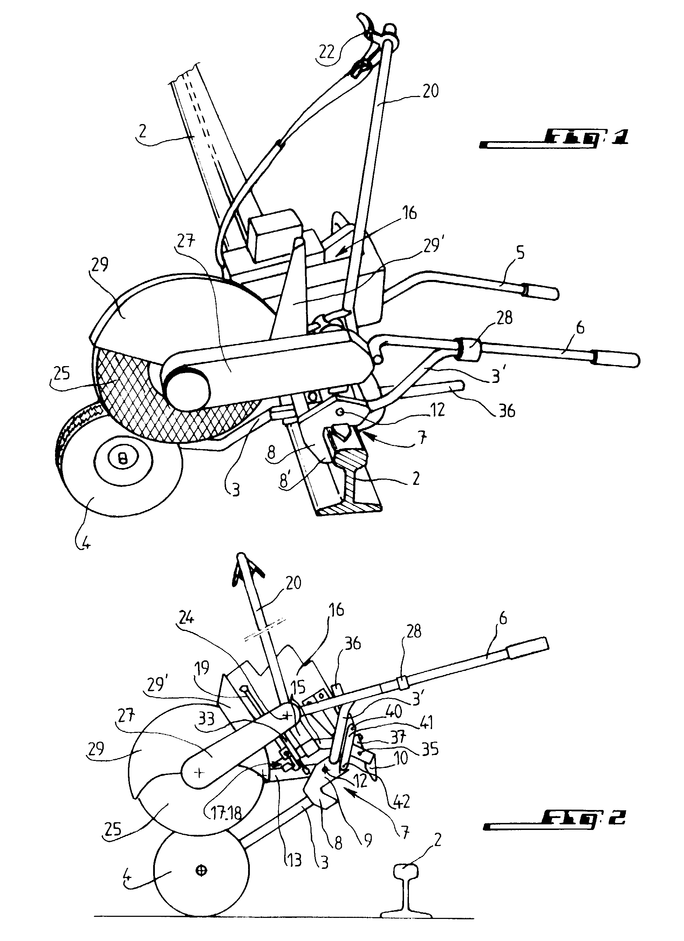

La figure 1 représente, en perspective, une tronçonneuse selon l'invention, lors de sa mise en place sur un rail de chemin de fer 2 à tronçonner.

cette tronçonneuse comprend un châssis 3 dont une extrémité est équipée d'une roue 4 et dont l'extrémité opposée est solidaire de deux bras saillants 5 et 3' transversalement espacés dont le bras saillant 3' est sélectivement accouplable à un levier de manipulation pivotant 6 dans la position inactive de ce levier dont les liaison et fonction seront décrites plus loin. Dans cette configuration accouplée, le levier de manipulation 6, ainsi rendu solidaire du châssis 3, constitue un second brancard de manutention. Les deux brancards 5 et 6 ont au moins leurs segments extrêmes libres respectifs sensiblement rectilignes et parallèles et sont munis respectivement de poignées de manoeuvre à leurs extrémités libres pour permettre le transport de l'ensemble par roulement sur le sol à La façon d'une brouette. Le châssis porte, dans sa partie intermédiaire, un étau 7 comportant une mâchoire coudée 8 relativement fixe par rapport au rail 2 et une mâchoire latérale coudée mobile de serrage 10. La mâchoire 8 relativement fixe embrasse partiellement le champignon de rail transversalement par un côté de celui-ci et comporte une portion latérale formant mors 8' entourant ledit côté du champignon de rail et portant par en dessous contre le bord inférieur de celui-ci ainsi qu'une portion adjacente d'appui 9 s'appliquant par une face sensiblement plane sur la face de dessus du champignon de rail.

La mâchoire mobile de serrage 10 est destinée à s'appliquer, par une portion formant mors, contre et sous le bord inférieur du champignon de rail de l'autre côté de celui-ci et est articulée, par son extrémité opposée, au moyen d'un axe 12' à l'extrémité voisine de la portion d'appui 9 de la mâchoire relativement fixe 8. Le mouvement de serrage et de desserrage de la mâchoire mobile 10 relativement au rail est actionné par un dispositif de commande manuelle associé, de préférence du type à genouillère permettant de réaliser un grand angle d'ouverture de la mâchoire mobile 10 (c'est-à-dire un grand angle d'écartement du mors de celle-ci par rapport au mors, situé en regard, de la mâchoire relativement fixe 8) ainsi qu'une force de blocage importante lors du serrage sur le rail et un réglage permettant à l'étau 7 de s'adapter à des rails de largeurs de champignon respectivement différentes.

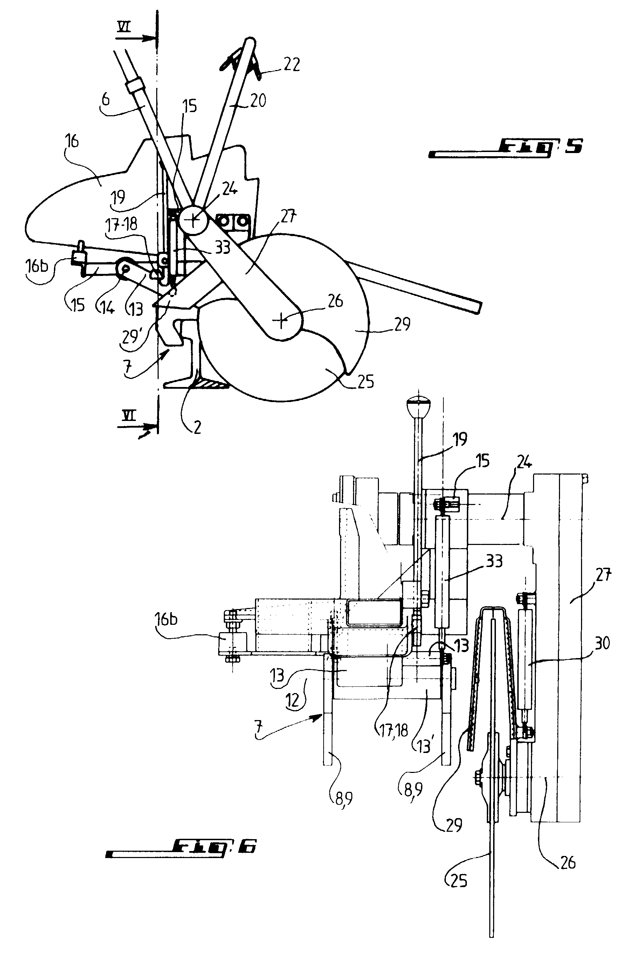

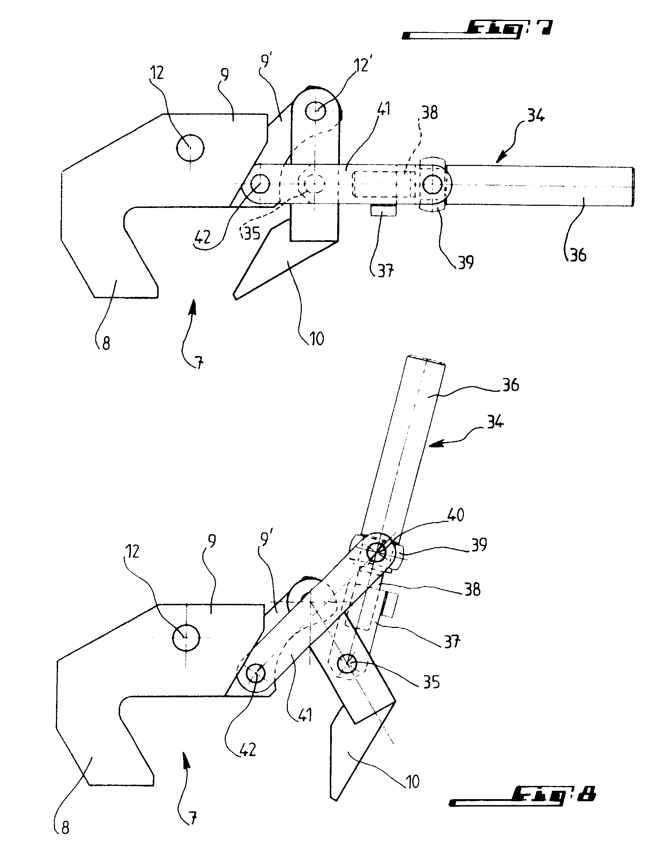

En fait pour permettre un agrippement ferme et stable du rail par l'étau 7, celui-ci comporte deux mâchoires relativement fixes, identiques ou symétriques et parallèles 8 solidaires et espacées l'une de l'autre et montées respectivement sur les extrémités opposées d'un moyeu intermédiaire 13' solidaire du bras oscillant 13 articulé à ces mâchoires relativement fixes 8 par l'axe d'articulation 12 comme le montre la figure 6. La mâchoire mobile 10 est également constituée par deux mâchoires mobiles identiques ou symétriques et parallèles, solidaires et transversalement espacées pour s'articuler en commun, par leur extrémité opposée à leur mors, à un appendice extrême saillant 9' de La mâchoire 8 respectivement de part et d'autre de cet appendice au moyen de l'axe d'articulation 12', cet appendice reliant rigidement les deux mâchoires jumelées 8 en les rendant ainsi solidaires l'une de l'autre. Ainsi, la paire de mâchoires mobiles jumelées 10 est située entre les deux plans parallèles respectifs des deux mâchoires jumelées relativement fixes 8.

Le dispositif de commande manuelle de l'étau et en particulier de la mâchoire mobile 10, représenté sur les figures 7 et 8 des dessins, comporte un levier 34 articulé par une extrémité au moyen d'un axe 35 en un point intermédiaire de la mâchoire mobile 10. Ce levier 34 se compose avantageusement des trois éléments suivants coaxialement alignés en prolongement les uns des autres : une poignée de manoeuvre 36 pourvue, à son extrémité opposée à son extrémité libre, d'un trou borgne taraudé s'étendant axialement ; un embout 37 articulé au moyen de l'axe 35 à son extrémité formant tenon à la mâchoire mobile 10 en s'insérant entre les deux éléments formant jumelles la constituant, cet embout étant pourvu, à son extrémité opposée, d'un trou borgne taraudé s'étendant axialement ; et un mamelon 38 formant raccord intermédiaire entre les pièces 36 et 37 et constitué par une tige comportant deux portions extrêmes extérieurement filetées et longitudinalement opposées et, entre ces deux portions filetées, un collet intermédiaire épaulé à portée ou surface latérale externe lisse, les deux portions extrêmes filetées opposées se vissant respectivement dans la poignée 36 et dans l'embout 37 jusqu'à ce que la poignée 36 vienne en butée contre le collet intermédiaire précité tandis que ce mamelon 38 se visse plus ou moins profondément dans l'embout 37 en permettant ainsi au levier 34 d'avoir une longueur totale variable par réglage vissant sélectif pour réaliser une ouverture plus ou moins grande des mâchoires de l'étau 7 adaptée à la largeur du champignon de rail à tronçonner.

Sur le collet intermédiaire lisse du mamelon de raccordement 38 précité est montée, par un alésage axial traversant avec un ajustement glissant tournant, une noix 39 disposée entre la face terminale de l'extrémité voisine de la poignée 36 et un rebord annulaire coaxial externe radialement saillant terminant la portée lisse du collet précité du côté de l'embout 3, de sorte que le mamelon 38 est librement tournant coaxialement dans la noix 39, la poignée 36 étant vissée à fond sur la portée filetée extrême correspondante du mamelon 38 jusqu'à venir en butée contre l'épaulement adjacent définissant le collet précité.

La noix 39 est pourvue bilatéralement respectivement de deux tourillons 40 coaxialement alignés suivant une direction transversale perpendiculaire à l'axe longitudinal de l'alésage lisse précité de la noix 39. Deux biellettes identiques parallèles jumelées 41 disposées de part et d'autre de l'appendice 9' de la mâchoire relativement fixe 8 et articulées par l'une de leur extrémité au moyen d'un axe 42 en un point intermédiaire dudit appendice et par leur extrémité opposée respectivement sur les tourillons 40 de la noix 39 en passant respectivement de part et d'autre de la mâchoire mobile 10 disposée entre elle.

Pour faire varier l'angle d'ouverture des deux mâchoires de l'étau 7, il suffit de faire varier la longueur du levier 34 et notamment du tronçon de celui-ci représentée par la distance d'entraxe entre les axes d'articulation 35 et 40. Ainsi pour augmenter l'angle d'ouverture précité, il est nécessaire de raccourcir cette distance d'entraxe en vissant davantage la poignée 36 dans l'embout 37 alors que, pour diminuer cet angle d'ouverture, il faut augmenter cette distance d'entraxe en dévissant la poignée 36 de l'embout 37. Pendant cette opération de vissage ou de dévissage, le mamelon de raccordement 38 reste pratiquement solidaire en rotation de la poignée 36 et tourne à la fois dans la noix 39 qu'il traverse et dans l'embout 37. En partant de la position d'ouverture ou desserrée de l'étau 7 représentée sur la figure 8, pour serrer ou refermer l'étau, il suffit d'abaisser le levier 34 pour l'amener de la position de la figure 8 à la position représentée sur la figure 7 dans laquelle le levier 34 est, pour ainsi dire, pratiquement aligné avec les biellettes 41 dont les axes longitudinaux respectifs sont ainsi parallèles à l'axe longitudinal propre du levier 34. Pour obtenir l'ouverture de l'étau à partir de sa configuration représentée sur la figure 7, il suffit de relever le levier 36.

Bien entendu, la structure du levier 34 peut être différence de celle venant d'être décrite et représentée, des moyens différents pouvant être prévus pour faire varier sa longueur à volonté par réglage sélectif et blocage à la longueur désirée.

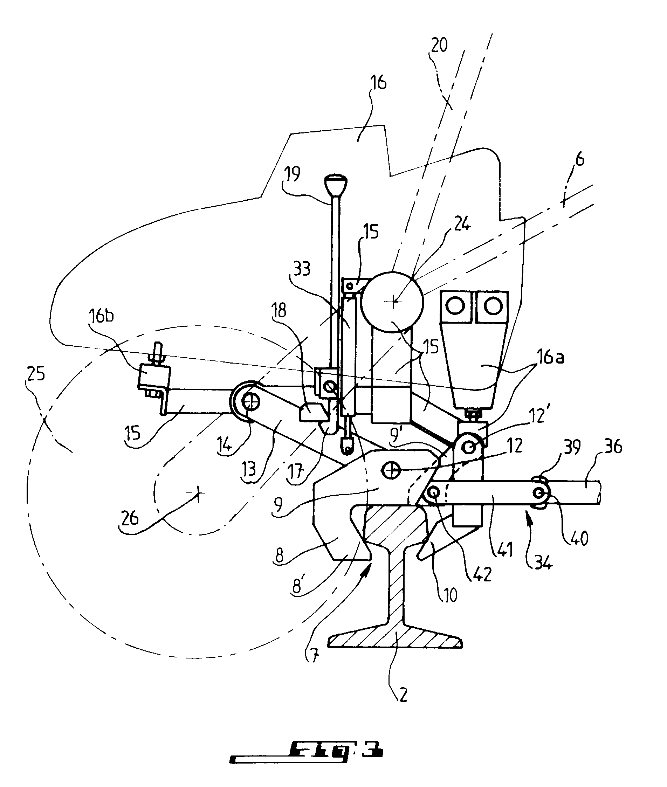

Selon l'exemple de réalisation représenté notamment sur les figures 1 et 2, le châssis 3, dont est solidaire la mâchoire 8 de l'étau 7, se prolonge au-delà de la mâchoire 8 par une tige formant le bras saillant précité 3' solidaire, par une extrémité, de la mâchoire 8 du côté opposé au mors de celle-ci donc solidaire du châssis 3. cette tige avantageusement galbée ou coudée 3' est sélectivement accouplable rigidement au levier de manipulation 6 et désaccouplable de celui-ci en configuration sensiblement jointive du bras saillant 3' et du levier pivotant 6 formant alors brancard dans sa position inactive basse, par exemple au moyen d'un collier ou manchon coulissant 28 porté par ledit brancard 6 et susceptible d'être enfilé sur l'extrémité libre de la tige 3' dans une position relative appropriée du brancard 6 donc de l'appareil, de sorte que le brancard 6 peut ainsi être à volonté rendu solidaire du châssis 3 ou être désolidarisé de celui-ci.

Sur la portion centrale 9 de la mâchoire 8 de l'étau 7 est monté pivotant, autour de l'axe d'articulation 12 qui ccrrespond à l'axe de l'étau, situé sensiblement dans le plan vertical longitudinal médian du rail 2 à tronçonner parallèlement à sa surface de roulement, le bras oscillant 13, à l'autre extrémité duquel est articulé, autour d'un axe 14 parallèle à l'axe 12, un support 15 pour un bloc moteur 16. Ce bloc moteur, fixé au support 15 par des appuis de suspension anti-vibratoire 16a, 16b, n'est pas décrit dans la mesure où il possède une structure connue. Sur le support 15 est monté par exemple coulissant un verrou 17 destiné à coopérer avec une butée 18 solidaire du bras oscillant 13 pour assurer le verrouillage de solidarisation du support 15 et du bras oscillant 13. Le verrou 17 par exemple en forme de crochet peut être déverrouillé par déplacement vers une position de désolidarisation en actionnant un levier de commande manuelle 19.

Le support 15 du bloc moteur 16 est équipé d'une levier 20 qui en est solidaire et à orientation générale orthogonale à l'axe 12 de l'étau 7 et dont l'extrémité libre possède une commande 22 de variation de vitesse ou d'accélération du moteur permettant d'ajuster notamment le régime de marche du moteur.

Le moteur entraîne, par l'intermédiaire d'un arbre 24 parallèle à l'axe 12 de l'étau, une meule 25 dont l'axe 26 est décalé par rapport à l'axe 24. A cet effet, la meule 25 est montée à l'extrémité d'un bras formant un carter 27, ce bras étant monté pivotant par rapport à l'arbre 24 à l'extrémité de celui-ci opposée à celle entraînée par le moteur et ce bras portant une poulie menante calée sur l'arbre 24 et entraînant, par l'intermédiaire d'une courroie crantée de transmission logée dans ledit carter, une poulie menée calée sur l'arbre de la meule 25.

Sur le carter 27 formant bras porte-meule est fixé le levier de manipulation 6 permettant de faire pivoter le bras porte-meule 27 en cours de travail et qui, comme indiqué précédemment, sert également de brancard de manutention de la tronçonneuse en période de non utilisation. Le levier 6 peut effectivement être désolidarisé de la tige 3' donc du châssis 3 par effacement du manchon 28. La meule 25 est protégée dans sa partie supérieure par un carter pivotant 29, sollicité ou actionné par un ressort tel que, de préférence, un vérin à gaz 30 dont une extrémité est articulée sur le carter 27 et dont l'autre extrémité est articulée à un axe solidaire du carter 29 mais décalé par rapport à l'axe 26 de la meule 25. Cela permet d'assurer une mise en position automatique du carter 29, quel que soit le côté duquel se situe la meule 25 par rapport au rail 2 à tronçonner, sans intervention de l'opérateur, par simple appui sur le rail. Il est prévu un capot pare-étincelles 29' embrassant une portion découverte de la meule 25, située du côté de l'opérateur pour protéger celui-ci contre des projections d'étincelles produites pendant la coupe du rail.

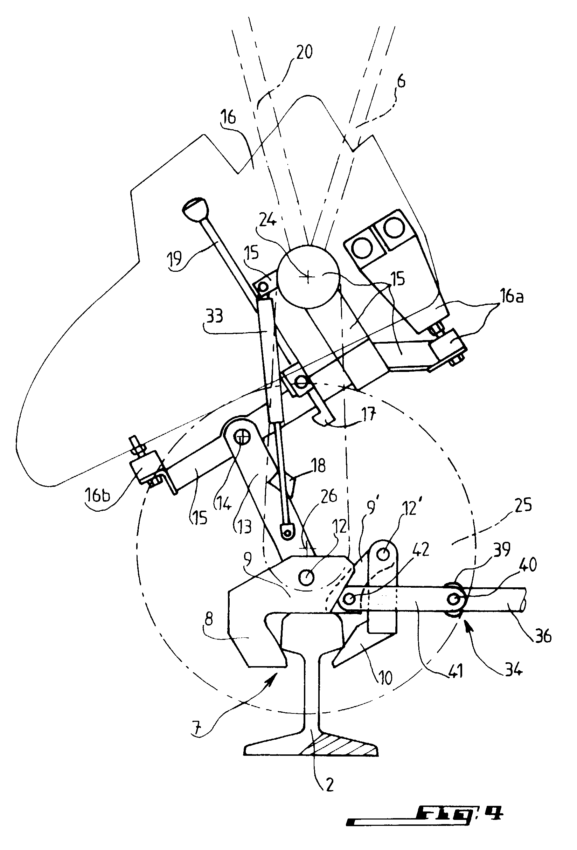

En pratique, l'appareil en configuration de transport est amené dans la position représentée à la figure 2. Il est abaissé sur le rail 2 jusqu'à ce que la mâchoire 8 de l'étau - prenne appui sur le rail. L'étau est alors fermé au moyen du levier 34 et le levier 6 est désolidarisé de la tige 3' donc du châssis 3. L'appareil se trouve dans la position générale représentée à la figure 3. Après mise en marche du moteur, il est alors possible pour l'opérateur de commencer à tronçonner le rail en exerçant une action simultanée et combinée d'une part sur le levier 20 solidaire du support 15 et permettant de faire pivoter l'ensemble composé du bloc moteur 16, du bras porte-meule 27, du support 15 et du bras saillant 13 autour de l'axe d'articulation 12 sur l'étau 7 pour régler La position angulaire relative de cet ensemble en fonction du degré d'usure du disque-meule 25 et d'autre part sur le levier 6 destiné à faire pivoter le bras porte-meule 27 autour de l'axe 24 pour régler la position relative du disque-meule 25 par rapport au rail ainsi que l'avance de coupe. Lorsque la coupe ne peut plus s'effectuer de ce côté, l'opérateur arrête la rotation de la meule, puis désolidarise le support 15 du bras oscillant 13 par levée du verrou 17 au moyen du levier 19. Un ressort tel que, de préférence, un vérin à gaz 33, disposé entre le bras oscillant 13 et le support 15, tend par détente à élever le support 15 ainsi que le bloc moteur 16, comme montré à la figure 4, en ouvrant l'angle formé entre ces deux éléments déverrouillés, ce qui permet le passage de la meule 25 d'un côté à l'autre du rail 2 en soulageant l'effort correspondant de l'opérateur. Lorsque le meule 25 est passée de l'autre côté du rail 2, le support 15 est de nouveau verrouillé sur le bras oscillant 13 au moyen du dispositif 17, 18, 19 pour occuper la position générale représentée à la figure 5. Après remise en fonctionnement de la meule, l'opérateur, en manoeuvrant les leviers 20 et 6, peut alors procéder au sectionnement de la seconde partie du rail pour compléter le tronçonnage partiel précédent et finir de trancher le rail sur toute sa section transversale.

Comme il ressort de ce qui ci précède, l'invention apporte une grande amélioration à la technique existante en fournissant une machine de tronçonnage d'une grande efficacité, compte tenu de la double articulation, d'une part, du support de bloc moteur relativement à l'étau et, d'autre part, de la meule par rapport au bloc moteur, tout en assurant une position de travail confortable et sûre pour l'opérateur et en permettant de tronçonner un rail sur toute sa section transversale en une seule passe discontinue sans avoir à désolidariser le bloc moteur de l'étau puis à le rendre de nouveau solidaire de celui-ci.

Comme il va de soi, l'invention ne se limite pas à la seule forme d'exécution de cet appareil décrite ci-dessus à titre d'exemple ; elle en embrasse , au contraire, toutes les variantes. C'est ainsi notamment que le châssis 3 pourrait ne pas être équipé d'une roue 4 et ne pas comporter de brancards 5,6 ou encore que le levier d'actionnement de la meule pourrait ne pas servir de brancard pour le transport de la tronçonneuse en période de non utilisation, sans que l'on sorte pour autant du cadre de l'invention.

## Revendications

1. Tronçonneuse pour pièces métalliques allongées, notamment pour rails (2) de voie de chemin de fer, du type comportant un bloc moteur (16) associé à une meule (25) qu'il entraîne en rotation et monté sur un support (15) servant de guidage dans le plan de le meule et pivotant transversalement par rapport à le pièce métallique (2) en étant monté pivotant sur un étau (7) destiné à être fixé sur la pièce métallique (2), tandis que la meule (25) est montée à une extrémité d'un bras (27) relié par son autre extrémité au bloc moteur (16), caractérisée en ce que ledit bras porte-meule (27) est monté pivotant par sa dite autre extrémité sur le bloc moteur (16) autour d'un axe d'articulation (24) parallèle à l'axe (12) d'articulation sur l'étau (7) et à la direction d'axe longitudinal de la pièce métallique à tronçonner, tandis que le bloc moteur (16) est relié en permanence à l'étau (7) de façon non-retournable autour d'un axe sensiblement vertical et non renversable autour d'un axe sensiblement horizontal en étant ainsi toujours situé d'un même côté du plan de la meule (25) par rapport à l'étau (7).

2. Tronçonneuse selon le revendication 1, caractérisée en ce qu'en configuration de travail, l'axe longitudinal propre (24) de l'arbre moteur du bloc moteur (16) se trouve dans une position angulaire relative actuelle ou instantanée quelconque variable entre deux angles d'inclinaison limites de 45° de part et d'autre du plan vertical longitudinal médian du rail (2).

3. Tronçonneuse selon le revendication 1 ou 2, caractérisée en ce que le support (15) du bloc moteur (16) est relié à l'étau par un bras oscillant (13) articulé par l'une de ses extrémités à l'étau (7) autour d'un axe (12) parallèle à l'axe de rotation d'ouverture et de fermeture de celui-ci et par son autre extrémité au support (15) du bloc monteur (16), autour d'un axe (14) parallèle au précédent, des moyens de verrouillage (17, 18) étant prévus entre le bras oscillant (13) et le support (15) du bloc moteur (16), pour solidariser ceux-ci entre eux de façon sélectivement déblocable dans une position angulaire relative dans laquelle le bras oscillant (13) forme un angle aigu avec le support (15) du bloc moteur (16).

4. Tronçonneuse selon la revendication 3, caractérisée en ce que le bras oscillant (13) est monté pivotant sur l'étau (7) en étant articulé par une extrémité à la partie Intermédiaire (9) de la mâchoire d'étau (8) relativement fixe par rapport au rail 2), prenant appui respectivement sur le dessus et en dessous du champignon du rail (2) tandis que l'autre extrémité du bras oscillant (13) est articulée au support (15) du bloc moteur vers une extrémité de celui-ci et l'axe d'articulation (24) du bras porte-meule (27), qui est coaxialement solidaire de l'arbre moteur, est disposé sensiblement à le verticale de l'axe d'articulation (12) sur l'étau (7) lorsque la tronçonneuse est au repos.

5. Tronçonneuse selon la revendication 4, caractérisée en ce que les moyens de verrouillage du support (15) de bloc moteur sur le bras oscillant (13) sont constitués par un crochet (17) monté de façon déplaçable notamment manuellement par rotation ou coulissement sur le support (15) de bloc moteur et destiné à venir accrocher une butée (18) solidaire du bras oscillant (13).

6. Tronçonneuse selon l'une des revendications 2 à 5, caractérisée en ce qu'au moins un ressort tel qu'un vérin à gaz (33) est disposé entre le bras oscillant (13) et le support (15) de bloc moteur (16) pour ouvrir l'angle que forment ces deux éléments, lorsque les moyens de verrouillage sont déverrouillés, afin de soulager l'effort nécessaire pour élever le bloc moteur et les organes qui lui sont attachés, lors du passage de la meule d'un côté du rail à l'autre côté.

7. Tronçonneuse selon l'une des revendications précédentes, caractérisée en ce que le support (15) de bloc moteur est solidaire d'un levier (20) d'orientation générale orthogonale à l'axe d'articulation (12) du bras oscillant (13) sur l'étau (7), et à l'extrémité libre duquel est montée une commande d'accélération (22) du moteur, et le bras (27) support de la meule (25) est solidaire d'un levier de manipulation (6) d'orientation générale orthogonale à l'axe d'articulation (12) de l'étau (7) pour pivotement sélectif du bras porte-meule (27) autour de son axe d'articulation (24).

8. Tronçonneuse selon la revendication 7, caractérisée en ce que les longueurs respectives du levier porte-accélérateur (20) et du levier de manipulation (6) précités ainsi que la position angulaire relative dudit levier porte-accélérateur (20) dans l'espace sont telles qu'en cours de travail, l'opérateur occupe une station debout confortable.

9. Tronçonneuse selon l'une quelconque des revendications précédentes, caractérisée en ce que l'étau (7) est solidaire, par sa mâchoire relativement fixe précitée (8), d'un châssis (3) à une extrémité duquel est disposée une roue (4) et de l'autre extrémité duquel est solidaire un bras saillant (5) formant un brancard de manutention.

10. Tronçonneuse selon les revendications 7 et 9, caractérisée en ce que le levier de manipulation (6), solidaire du bras (27) support de meule (25), est sélectivement accouplable rigidement au châssis (3) pour former l'autre brancard de manutention de la tronçonneuse en configuration et période de transport.

11. Tronçonneuse selon les revendications 9 et 10, caractérisée en ce que de ladite autre extrémité du châssis (3) est solidaire un second bras saillant (3') s'étendant sensiblement au même niveau que le premier bras saillant (5) sensiblement dans le plan vertical du levier de manipulation (6) ou au voisinage immédiat de ce plan vertical en étant transversalement espacé du premier bras saillant (5) et sélectivement solidarisable du levier de manipulation (6) de façon déconnectable en sa position abaissée sensiblement au même niveau que ledit premier bras saillant (5) et sensiblement parallèle à celui-ci, au moyen d'un verrou (28) porté par exemple par ledit levier de manipulation (6) et susceptible de coopérer avec l'extrémité libre dudit second bras saillant (3') en position sensiblement jointive dudit levier et de ladite extrémité.

12. Tronçonneuse selon l'une des revendications précédentes, caractérisée en ce que le moteur (16) entraîne un arbre (24) coaxial à l'axe autour duquel le bras (27) portant le meule (25) est monté pivotant, l'extrémité de cet arbre opposée à celle entraînée par le moteur (16) entraînant le meule (25) par l'intermédiaire d'une transmission à courroie crantée logée à l'intérieur de ce bras.
